# EUROPEAN PATENT SPECIFICATION

(11) **EP 3 029 568 B1**
(45) Date of publication and mention of the grant of the patent: **05.01.2022**
(21) Application number: 15003140.9
(22) Date of filing: 03.11.2015
(51) Int. Cl.: G06F 8/656

(54) **REMOTE UPDATE OF SOFTWARE COMPONENTS**
FERNAKTUALISIERUNG VON SOFTWAREKOMPONENTEN
MISE À JOUR À DISTANCE DE COMPOSANTS LOGICIELS

(30) Priority: 05.12.2014 US 201414561903
(43) Date of publication of application: 08.06.2016
(73) Proprietor: SAP SE, 69190 Walldorf (DE)
(72) Inventor: Fenzl, Johannes, 69190 Walldorf (DE); Winkler, Matthias, 69190 Walldorf (DE); Momm, Christof, 69190 Walldorf (DE); Janke, Thomas, 69190 Walldorf (DE)
(74) Representative: Müller-Boré & Partner Patentanwälte PartG mbB

(56) References cited:
- US-A1- 2013 277 969
- US-B1- 6 385 770
- JUNQING CHEN ET AL: "Supporting Dynamic Service Updates in Pervasive Applications", COMPUTER SOFTWARE AND APPLICATIONS CONFERENCE (COMPSAC), 2011 IEEE 35TH ANNUAL, IEEE, 18 July 2011 (2011-07-18), pages 273-278, XP031972235, DOI: 10.1109/COMPSAC.2011.43 ISBN: 978-1-4577-0544-1
- Hans Werner Pohl ET AL: "Using the Bridge Design Pattern for OSGi Service Update", Proceedings of the Eighth European Conference on Pattern Languages of Programs, EuroPLoP, 2003, 25th-29th June 2003, Irsee, Germany, 1 June 2003 (2003-06-01), pages 1-10, XP055546992, DOI: 10.1016/j.comcom.2010.03.032 Retrieved from the Internet: URL:https://pdfs.semanticscholar.org/cead/ 44d7cbc286f00847ed129f5e6dc384dab483.pdf [retrieved on 2019-01-24]
- PREMYSL BRADA: "Enhanced OSGi Bundle Updates to Prevent Runtime Exceptions", EUROMICRO CONFERENCE. PROCEEDINGS, 1 September 2008 (2008-09-01), pages 92-99, XP055546977, US ISSN: 1089-6503, DOI: 10.1109/SEAA.2008.51
- ESCOFFIER CLEMENT ET AL: "Describing Dynamism in Service Dependencies: Industrial Experience and Feedbacks", 2013 IEEE INTERNATIONAL CONFERENCE ON SERVICES COMPUTING, IEEE, 28 June 2013 (2013-06-28), pages 328-335, XP032519223, DOI: 10.1109/SCC.2013.82

## Description

### BACKGROUND

The cost and the size of basic processing devices have decreased dramatically in recent years. Consequently, the use of processing devices is envisioned in scenarios which would have previously been cost- or space-prohibitive. In one such scenario, many devices are deployed in different places and operational areas, for example in a collection of processing plants. The primary task of these devices may be to measure sensor values, process and persist the data, as well as to forward the data to a backend system. The backend system consolidates the data received from all devices and provides an interface through which the collected data may be consumed by various applications.

Even if the exact task of a device is fixed upon deployment, it may eventually be desirable to update the software running on the device. For example, updates may be desired to fix detected software bugs, optimize performance of the software and/or the device, or add new features to the software. Depending on the usage scenario, it may be necessary to update the software of thousand of devices simultaneously. Manual intervention is often not feasible due to the sheer number of deployed devices, having different configurations, as well as the geographical distribution of the devices.

Document US 2013/0277969 A1 discloses a wind park control system for controlling wind turbines of a wind park during a plant controller handover. A plurality of plant controllers compute control values on the basis of system input data, which plant controllers are realized to operate in parallel. One of the plant controllers operates as an active plant controller for computing control values for controlling the wind turbines. One further plant controller operates as a standby plant controller. An output means continually issues control values to the wind turbines of the wind park. A handover arrangement for handing over control from the hitherto active plant controller to an operative standby plant controller is provided such that that standby plant controller then assumes the function of active plant controller. Further, a wind park, a method of controlling a wind park, and a method of performing a plant controller handover in a wind park are disclosed.

Document US 6,385,770 B1 discloses a method and apparatus for efficient upgrading of a software system by a plurality of versions which allows upgrades from an arbitrary software system version to another arbitrary subsequently released software system version at reduced cost and down time by executing an upgrade framework including all upgrade tasks identical for individual upgrade steps between two subsequent software system versions and a plurality of upgrade contents including tasks specific for each upgrade step. This allows to upgrade a software system in a real-time environment using a source system operating with an old software version and a target system for operating with the new software version and allows to handle static as well as dynamic data.

Document JUNOING CHEN ET AL: "Supporting Dynamic Service Updates in Pervasive Applications", COMPUTER SOFTWARE AND APPLICATIONS CONFERENCE (COMPSAC), 2011 IEEE 35TH ANNUAL, IEEE, 18 July 2011, pages 273-278, XP031972235, discloses a dynamic service update framework to support transparent updates of running applications, and illustrates update mechanisms of the framework.

Document Hans Werner Pohl ET AL: "Using the Bridge Design Pattern for OSGi Service Update", Proceedings of the Eighth European Conference on Pattern Languages of Programs, EuroPLoP, 2003, 25th-29th June 2003, Irsee, Germany, 1 June 2003 (2003-06-01), pages 1-10, XP055646992, discloses a bridge design pattern to decouple service replacement from component updates. Instead of registering services only references to instances of automatically generated bridge classes are registered.

Document Premysl Breda: "Enhanced OSGi Bundle Updates to Prevent Runtime Exceptions", EUROMICRO CONFERENCE, PROCEEDINGS, 1 September 2008 (2008-09-01), pages 92-99, XP055546977 discloses a method that ensures safe OSGi bundle updates and package bindings despite potentially erroneous metadata. It uses subtype checks on feature types, implemented as user-space enhancements of the standard bundle update process.

Document ESCOFFIER CLEMENT ET AL: "Describing Dynamism in Service Dependencies: Industrial Experience and Feedbacks", 2013 IEEE INTERNATIONAL CONFERENCE ON SERVICES COMPUTING, IEEE, 28 June 2013 (2013-06-28), pages 328-335, XP032519223, relates to describing dynamism in component metadata and managing dynamism at runtime.

The application is directed to continuous service of software containers. The present invention is defined according to the independent claims. Specific embodiments are defined in the dependent claims.

### BRIEF DESCRIPTION OF THE DRAWINGS

FIG. 1 is a block diagram of a software architecture according to some embodiments.
FIG. 2 is a flow diagram according to some embodiments.
FIG. 3 illustrates transformation of a configuration according to some embodiments.

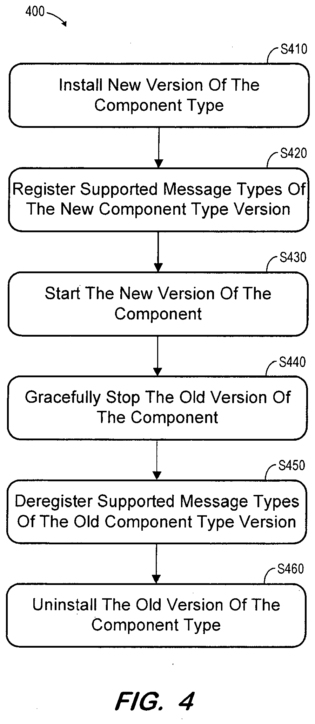

FIG. 4 is a flow diagram according to some embodiments.
FIG. 5 is a block diagram of a software architecture according to some embodiments.
FIG. 6 is a block diagram of a software architecture illustrating updating of a component according to some embodiments.
FIG. 7 is a class diagram according to some embodiments.
FIG. 8 is a sequence diagram of a component update according to some embodiments.
FIG. 9 is a state diagram of a software component according to some embodiments.
FIG. 10 is a block diagram of a hardware system according to some embodiments.

### DETAILED DESCRIPTION

The following description is provided to enable any person in the art to make and use the described embodiments. Various modifications, however, will remain readily apparent to those in the art.

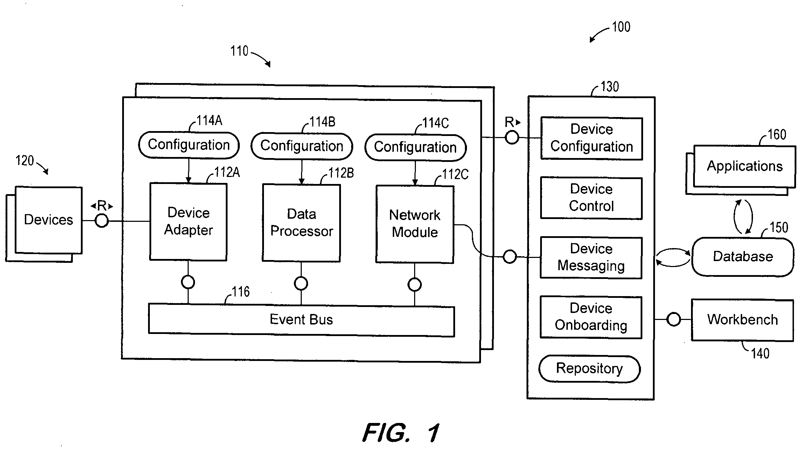

FIG. 1 is a block diagram of system 100 according to some embodiments. System 100 includes connectors 110, devices 120, core 130, workbench 140, database 150 and applications 160. As will be described below, some embodiments of system 100 provide an efficient mechanism to automatically update software components of numerous and highly-distributed devices.

Each of connectors 110, core 130, and workbench 140 consists of processor-executable program code and/or data. The code and data are stored in memory and executed by a processor of a respective hardware device. For example, each of connectors 110 may comprise program code executed by a processor of a respective hardware device, core 130 may consist of program code providing the functions illustrated therein, which is executed by a hardware server.

Each connector 110 is in communication with and manages one or more devices 120. A device 120 may comprise a sensor, an actuator, a programmable logic controller, or other type of device. A connector 110 receives data from and/or transmits data to its one or more corresponding devices 120. Accordingly, a connector 110 is typically in proximity of its corresponding devices 120.

Each connector 110 also establishes connections to core 130. A connector 110 uses these connections for receiving its device configuration as well as sending processed data to core 120.

Each connector 110 is a software container onto which software components 112A-112C can be deployed. In some embodiments, components may comprise device adapters, data processors and network modules. The container may comprise an Open Service Gateway initiative (OSGi) container, in which case each deployed component may comprise an OSGi component implemented in, for example, Java. Embodiments are not limited to the foregoing protocol or language.

The OSGi framework provides a general-purpose, secure and managed container for Java applications that enables the deployment of extensible software components. In the context of OSGi, these components are known as bundles. Bundles are self-contained applications that can be downloaded and installed within an OSGi container. If a bundle is no longer required, it can be removed from the container. Lifecycle events, such as installing, starting, stopping and uninstalling, can be executed while a bundle is executing.

A bundle may be packaged and deployed as a Java archive (JAR) file and provides functionality to the application. Besides a collection of class files for the Java programming language, a bundle may also contain other resources such as Extensible Markup Language (XML) files or graphics as well as a bundle documentation. Furthermore, each bundle contains an extensible manifest file. The manifest file describes the content of the JAR file and consists of several key-value pairs, called Manifest Headers. A Manifest Header specifies a bundle's attributes and its dependencies. When the bundle is loaded, the OSGi framework first inspects this manifest file and proceeds loading and running if the stated requirements on other resources are fulfilled.

The manifest file below states the manifest version which the following specified headers are based on. In addition to a readable name and description of the bundle, the manifest declares a symbolic name and version. The latter two attributes are used to make the bundle identifiable. The Bundle-Activator header sets the name of the Java class which is called to start and stop the bundle. In addition, the manifest file can also list specific execution environments or other dependent bundles required to run the bundle. The Export-Package header declares which packages of the bundle will be made available to other bundles. Likewise, the Import-Package header declares which packages to retrieve from other bundles.
Bundle-ManifestVersion: 2
Bundle-Name: Sample Bundle
Bundle-Description: This is a sample bundle.
Bundle-SymbolicName: com.example.samplebundle
Bundle-Version: 1.0.0
Bundle-Activator: com.example.Activator
Bundle-RequiredExecutionEnvironment: JavaSE-1.6
Require-Bundle: com.example.requiredbundle; bundle-version = "1.1.0"
Export-Package: com.example.samplebundle; version = "1.0.0"
Import-Package: org.osgi.service.io; version = "1.4"
x-customHeader: true

Device adapters manage data communication to and from devices 120. Data processors manipulate inbound and outbound data by performing operations such as filtering, transforming, aggregating and packaging. Data processors may also be responsible for data persistency, since data may not be transferred to core 130 immediately. Network modules manage the data communication between a connector 110 and core 130 by providing various implementations of network protocols such as WebSocket or Message Queue Telemetry Transport. In addition to the container, a connector 110 may also provide functions for device onboarding and availability monitoring.

Core 130 provides an onboarding service for admission of newly-deployed devices, a device control service, a device configuration service and a device messaging service. Each of these services may be implemented in a server-compatible language such as Javascript. Core 130 may be implemented in a local database system and/or in the cloud.

Core 130 executes the device control service to issue commands to a connector 110. The device configuration service enables modeling of the device landscape and transmission of configuration parameters. The messaging service is responsible for handling voluminous upstream data payload from connectors 110. This upstream data may be persisted and written into database 150. From the persistence, the data can be consumed by various applications 160 in order to be analyzed, processed or visualized.

Core 130 also includes a software repository of packages which may be retrieved and installed on connectors 110. The software packages may comprise different versions of the connector framework itself as well as many components and versions thereof to run within a connector 110.

Database 150 may implement an "in-memory" database, in which volatile (e.g., non-disk-based) storage (e.g., Random Access Memory) is used both for cache memory and for storing the full database during operation, and persistent storage (e.g., one or more fixed disks) is used for offline persistency and maintenance of database snapshots. Alternatively, volatile storage may be used as cache memory for storing recently-used data, while persistent storage stores the full database. In some embodiments, data of database 150 comprises one or more of conventional tabular data, row-based data stored in row format, column-based data stored in columnar format, and object-based data.

Workbench 140 may comprise a web application running on top of core 130. Workbench 140 provides a user interface that allows an extensive management of deployed devices. Particularly, the web application enables an administrator to enroll new connectors 110 as well as to define configurations for them and their respective components. In addition, workbench 140 allows an administrator to start, stop, reset and monitor the states of connectors 110 and their components.

Returning to components such as components 112A-1112C, each component may be packaged in a JAR file containing at least a valid manifest file as well as an activator class which implements a start and a stop method. Furthermore, the framework of connector 110 expects a component's JAR file to contain three interface specifications that are used to integrate a component into system 100. These three interface specifications are: 1) a definition of the component's configuration parameters; 2) a list of message types the component is able to consume and produce; and 3) a user interface (UI) which enables an administrator to configure the component's parameters.

The definition of a component's configuration parameters is realized by an Extensible Markup Language Schema Definition (XSD) file. The XSD file formally describes and constrains the contents of XML documents. As will be described below, each well-formed XML document that is validated against a component's schema definition can be used as a configuration for the component. Via a marshalling method, the configuration XML document is transformed into an internal Java object representation such that the configuration parameters can be used at runtime.

Components share information by sending messages to each other. The list of message types defines the interface used by the components for these messages. According to some embodiments, the communication utilizes the service layer of the OSGi framework. When a component is loaded, a routine registers a service with the service registry of the service layer that subscribes for messages of the specified message types. Each message type indicates its structure and data types.

The aforementioned UI specification is delivered with the component type's JAR file and is integrated into workbench 140 when a corresponding component needs to be configured. The UI specification may be based on a UI framework for developing rich user interfaces for web applications. The UI of a component type's JAR file may consist of a model (i.e., a configuration XML document validated against a configuration XSD), a controller (i.e., code to manipulate the XML document), and a view (i.e., code to generate an output representation from the XML document).

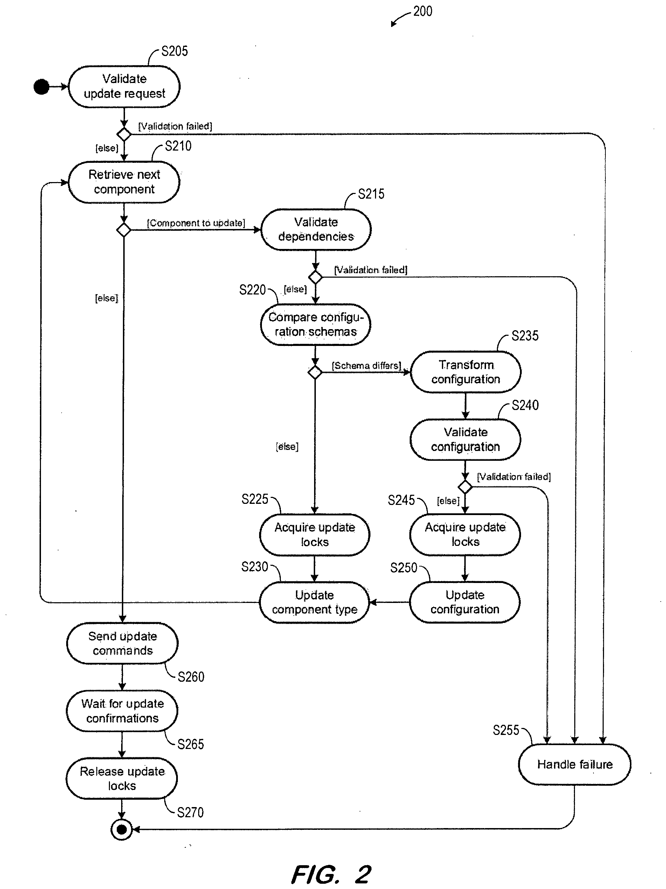

FIG. 2 comprises a flow diagram of process 200 according to some embodiments. Process 200 may be executed in some embodiments to enable a remote update of components running on top of distributed connectors. In some embodiments, a processor of core 130 executes its device configuration service to perform process 200.

Process 200 and all other processes mentioned herein may be embodied in processor-executable program code read from one or more of non-transitory computer-readable media, such as a floppy disk, a CD-ROM, a DVD-ROM, a Flash drive, and a magnetic tape, and then stored in a compressed, uncompiled and/or encrypted format. In some embodiments, hard-wired circuitry may be used in place of, or in combination with, program code for implementation of processes according to some embodiments. Embodiments are therefore not limited to any specific combination of hardware and software.

Prior to process 400, it is assumed that new component type versions (e.g., JAR files) have already been uploaded to the repository of the core 130. To trigger a component update, an administrator operates workbench 140 to filter a subset of the managed devices and specify the execution time of the update. Depending on the reason for the update, the deployment scenario and the size of the infrastructure, an update might only be applied to a single component 112 running on one connector 110 or to a more specific selection of devices. For example, workbench 140 may allow an administrator to trigger an update for components 112 of all connectors 110 that are located in a specific area. To allow such filters, workbench 140 is aware of the current deployment state of its managed devices.

According to some embodiments, an update request may include any of the optional filters Organizations, Locations, Connectors, Components and OriginalComponentTypeVersion. Values for each of these filters may be specified using identifiers of the corresponding entities. Mandatory filters of the update request may include ComponentType and TargetComponentTypeVersion. ComponentType specifies an identifier of a component type to which the selected components will be updated, and TargetComponentTypeVersion is used to specify a component type version to which the selected components will be updated.

A corresponding serialized format of an update request using the above attributes is as follows:

```
 [{
              Connector: [10]
              OriginalComponentTypeVersion: [2, 3]
              ComponentType: 1,
              TargetComponentTypeVersion: 4
 }]
```

The following request intends to update all components of the organizations with identifiers 1 and 2 to their newest available versions. The request also intends to update all components of component type 2 that are deployed on connectors that belong to the organization with identifier 3 and are located at location 1 to version 5.

```
 [{
              Organizations: [1, 2],
              ComponentType: null,
              TargetComponentTypeVersion: null
 },
              Organizations: [3],
              Location: [1],
              ComponentType: 2,
              TargetComponentTypeVersion: 5
 }]
```

The update request is received and validated at S205. According to some embodiments, the device configuration service of core 130 receives an incoming update request and validates the update request to the corresponding connectors 110. S205 is intended to ensure that only valid update requests are passed to connectors 110.

Initially, the update request is deserialized and parsed. If the update request does not comply with the defined interface specification, flow proceeds to S255. In some embodiments, the entire update request is refused and an error message is sent back to the sender of the update request at S255.

As mentioned above, validation may fail if the serialized message of the update request is parsed and its content violates the grammatical rules of the serialization format defined in the interface specification. These errors occur, for example, if the serialized update request contains undefined attributes, does not instantiate mandatory attributes or contains delimiter symbols, such as brackets or commas, in a wrong order.

On the other hand, interpretation of the update request may result in semantic errors. That is, though the update request is syntactically correct, its meaning is inconsistent with the restrictions of the interface specification or the current state of the framework. A semantic error would occur, for example, if an update request contains multiple selection sets and thereby requests to update a single component to different component type versions at the same time.

Validation of the update request may include interpreting the filtering attributes of the update request. This in turn includes constructing the actual set of selected components by querying the database of the device configuration service. The elements of the selection set do not necessarily have to be of the same component type. As a result, for each element of the selection set, either the newest-available component type (or a specific version specified in the filters) is selected and buffered in a temporary storage for the subsequent steps of process 200.

A first one of the buffered components is retrieved at S210, and its dependencies are validated at S215. Components typically have dependencies on other resources, and these dependencies might change during an update. For example, a new component type version might require a newer software version of the connector framework before it can be started. Accordingly, before updating a component, it is necessary to check whether the dependencies of the targeted component type version can be satisfied.

There are generally two different types of resources on which a component can depend. A component might require, as already mentioned in the above example, a specific version or version range of the connector framework. On the other hand, components might depend on other components that are responsible for providing their input or consuming their outbound messages.

Assuming that the dependency validation is successful, it is determined at S220 whether the updated version of the component defines a new configuration XSD that differs from the configuration XSD of the component that is being updated.

The configuration XSD defines the parameters of a component. The parameters are specified within an XML document and are loaded when the component is activated on the connector. The following are examples of a component's configuration XSD and a component's configuration XML.

```
 <?xml version="1.0" encoding="UTF-8" ?>
 <xs:schema xmlns:xs="http://www.w3.org/2001/XMLSchema">
    <xs:element name=" SampleConfiguration ">
        <xs:complexType>
             <xs:all>
                 <xs:element name="param0" type="xs:integer"/>
             </xs:all>
        </xs:complexType>
    </xs:element>
    </xs:schema>
    <?xml version="1.0" encoding="UTF-8"?>
    <SampleConfiguration>
       <param0>2</param0>
       </SampleConfiguration>
```

Comparison of configuration schemas may be facilitated by versioning the configuration XSDs. Versioning concept of the configuration XSD decouples version changes of a component from version changes of its configuration XSD. If, for instance, the implementation of a component changes but its configuration XSD remains constant, only the version number of the component needs to be increased. Then, when updating to the new component version, there is no need to transform the configuration because the version of the configuration XSD has not changed.

To realize versioning of configuration XSDs, the XSD is extended by version information. In one example, an internal schema version attribute is added at the start of each XML schema definition as follows:
<xs:schema xmlns:xs="http://www.w3.org/2001/XMLSchema" version="MAJOR.MINOR.PATCH">

When the XSD changes, the value of the version attribute is simply changed. Similar to the versioning of components, a configuration XSD should maintain a version number according to the format MAJOR.MINOR.PATCH. Furthermore, each component specifies which XSD version it expects for instantiated configuration documents. To achieve this, the manifest file of an component adds the following custom attribute:
x-Bundle-Configuration-Version: <MAJOR.MINOR.PATCH>

The configuration is transformed at S235 if it is determined at S220 that the updated version of the component defines a new configuration XSD that differs from the configuration XSD of the component that is being updated.

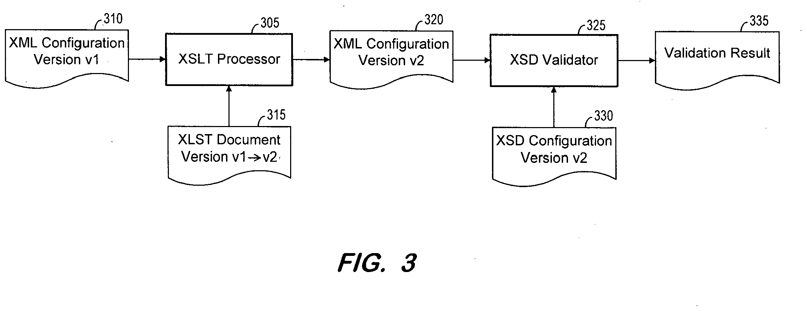

As shown in FIG. 3, extensible Style Sheet (XSLT) document 315 is provided for version changes of the configuration XSD. XSLT processor 305 uses document 315 to transform XML configuration document 310 into XML configuration document 320 at S235.

XSD validator 324 validates XML configuration document 320 against the desired XSD version 330 at S240. One source of errors are faulty transformations that are created by the developer of the new component type version. The validation would also fail, if, for example, an appropriate composition of mappings building the transformation path from the original version to the desired version could not be found.

Next, at S245, update locks are acquired for the ongoing update request in order to prevent concurrent write access to the configuration, prevent multiple concurrent update requests, and prevent the deletion of the JAR file of the desired component type version. A lock on the configuration of a component is used to prevent a user of workbench 140 from reconfiguring the component being updated. Since the update has not been persisted at this point, the application logic of workbench 140 still produces XML configurations according to the previously-effective configuration schema version.

The handling of multiple concurrent update requests is limited by introducing locks at different levels of granularity. Coarse-grained locks that fully refuse concurrent update requests may be used to exclude interference with other update requests. Locks at the connector level may assure that one update request per connector is handled at a time. Using the latter locks, an update request asking to update multiple components on one device can still be performed without interference. At the same time, other update requests asking to update components on different connectors can be executed in parallel.

The third lock prevents the deletion of the JAR file of the desired component type version while an update request is in process. This ensures that a connector device can effectively retrieve the JAR file from the repository after it receives the update notification. The period between the time the update command is issued and the time the connector receives the notification can vary greatly. For this reason, the lock on a JAR file is active until the last connector confirms the update that was asked to update components to the version this JAR file provides.

If a lock cannot be acquired at S245 because a different update request holds the lock, process 200 waits for the release of the lock and retries acquiring it at a later point in time. To avoid deadlocks, the maximal waiting period may be limited by a timeout. In case the timeout time expires, the single update or the whole update process may be cancelled.

After acquiring the update locks, the collected update information as well as the state of the update process are persisted within core 130 at S230. Both the transformed XML configuration and the desired component type version of the component may be persisted. The data to be persisted may also include information about the current state of the ongoing update.

Once the updated component has persisted successfully, the write lock on the configuration of the component can be released. The configuration service may check each write request on the configuration to determine whether a reconfiguration which was, for example, triggered by a user of workbench 140, complies with the configuration schema version of the currently-persisted component type version. If not, the write request is refused. This will allow reconfigurations during the update process but will ensure their validity.

The update is issued to the corresponding connectors at S260. The update commands may be sent using a pull- or push-based communication channel between the configuration service of the core 130 and the connector 110.

A new atomic update command is introduced to update a component. Instead of sending a sequence of existing commands, only one command is sent to trigger an update on the connector. The table below shows the attribute specification of the new update command UPDATE_COMPONENT_TYPE.

| Attribute | Description |
|---|---|
| ID | Identifier of the component to be |
| | updated |
| SYMBOLIC_NAME | Identifier of the targeted component type |
| VERSION | Identifier of the targeted component type version |
| CONFIGURATION | XML Configuration for the updated IoT Component if it has changed, empty otherwise |
| REMOVED_MESSAGE_TYPES | List of removed message types |
| ADDED_MESSAGE_TYPES | List of added message types |
| REMOVED_SUPPORTED_MESSAGE_TYPES | List of removed supported message types |
| ADDED_SUPPORTED_MESSAGE_TYPES | List of added supported message types |
| EXECUTION_TIME | Point in time when to perform the update if desired, empty otherwise |

Another command UPDATE_COMPONENT_TYPES may be introduced to allow the update of multiple components on a single connector within one update process. The structure of this command is as follows: The body contains a list of updates according to the specification of the above table. If no execution time is specified, or if multiple elements of the list specify the same point in time, then the order of the list indicates the order of execution, i.e., the first element of the list is executed first.

Flow pauses at S265 to wait for update confirmations. In this regard, the connector framework informs the configuration service about the result of each command execution. There may be circumstances in which a connector does not confirm an update command within a timeout period. In this case, another command may be sent to the connector that requests a reset of the connector.

Independent of the success of the update, the state information of the component in the persistent storage is reset. Then, it is determined whether all updates that had been sent to a single connector were confirmed. If so, the update lock on this connector can be released at S270. Once all updates have been confirmed, the locks that prevent the deletion of the JAR files of the desired component type versions can be released.

Returning to S255, if an individual update cannot be performed because its dependency validation failed, a valid configuration could not be found, locks could not be acquired or its execution failed or is not confirmed, this update may be skipped and flow returned to S210 to proceed with updating a next component process. In this case, any updates that depend on the skipped update should also fail.

A connector framework receives and interprets incoming update commands and performs the desired updates at the specified point in time and in the given order of execution. Process 400 may be executed by connector 110 to perform an update according to some embodiments. Initially, a new version of a component type specified by the received update message is installed.

Components communicate with each other using defined interfaces. The defined interfaces are the message types each component supports. For that purpose, the developer of a component type indicates which message types a component type expects as an input (i.e., incoming message types) and which it will produce as output (i.e., outgoing message types). Accordingly, at S420, supported message types of the new component version are registered.

The new version of the component is started in the connector framework at S430. When started in the framework, and due to the registration at S420, the started component type subscribes to messages of message types that have been declared as incoming. During its operation, the instantiated component type is also able to publish messages of the message types that have been declared as outgoing. This architecture conforms to the publish-subscribe pattern. In this regard, a component can be publisher and subscriber at the same time, and the OSGi event bus is responsible for the delivery of published messages to the corresponding list of subscribers.

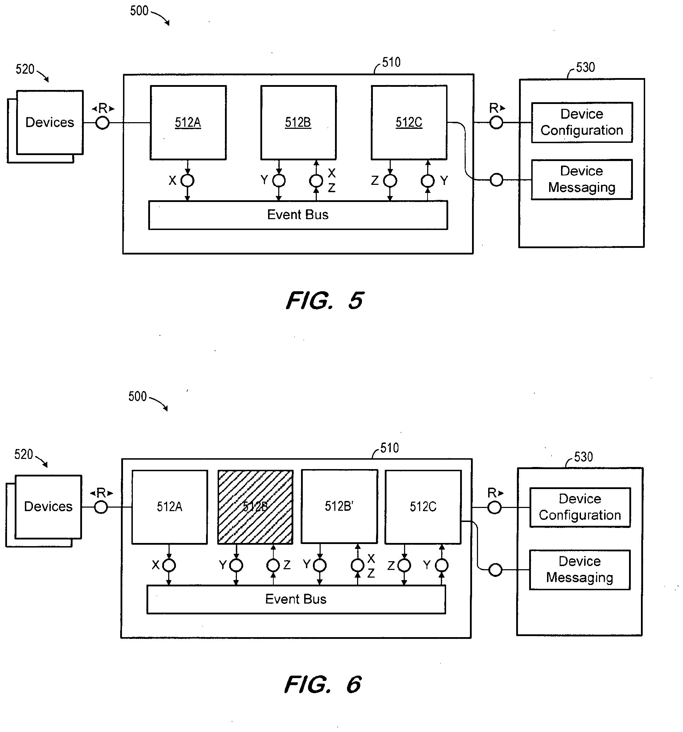

FIG. 5 illustrates this approach for a typical deployment scenario in which device adapter 512A, data processor 512B and network module 512C build the processing chain of connector 510. In this simplified diagram, arrows pointing from a component to the event bus indicate the flow of published messages, and the opposite direction indicates the message flow of subscribed message types. For example, data processor 512B publishes messages of type Y and subscribes messages of type X and Z.

The new version of the component is started at S430. Notably, the new version is started before the old version instance is stopped. Because the new version instance subscribes to messages of the same type as the old version instance, messages will not get lost when the old instance is stopped. Instead, the new version instance takes over the receiving and processing of the subscribed-to messages.

To prevent delivery of messages to both instances which subscribe to the same message types, the old version instance is stopped "gracefully" at S440. Graceful stoppage, as used herein, indicates that no new incoming messages that would create new jobs are accepted, while already-accepted messages are allowed to be processed completely. In addition, during graceful shutdown, the old version instance stops requesting or accepting new jobs from other channels. For example, device adapter 512A requests data from a connected sensor device 520. During an update, the old version instance of device adapter 512A stops requesting data from sensor device 520. At the same time, a new version instance of device adapter 512A takes over this task.

Depending on the number of already-accepted messages or jobs and their required execution times, graceful shutdown might last several seconds. The old version instance is stopped after all accepted messages and jobs have been processed, and the supported message types of the old component type version are deregistered at S450. The old version of the component type is uninstalled at S460.

FIG. 6 illustrates process 400 according to some embodiments, based on the deployment scenario of FIG. 5. In particular, FIG. 6 illustrates a dynamic software update of data processor 512B. As soon as the new version of data processor 512B' is loaded and started on connector 510 (e.g., at S410), it subscribes to the same message types X and Z as original data processor 512B (e.g., at S420). Substantially simultaneously, original data processor 512B starts to a graceful shutdown and stops receiving new jobs by unsubscribing to messages of type X. Original data processor 512B does not unsubscribe to those message types that are needed to complete the graceful shutdown. In this example, this applies to the message type Z, which might confirm the successful delivery of a sensor value by network module 512C. Original data processor 512B is able to publish messages of type Y until all of its existing jobs have completed. Next, original data processor 512B is removed, leaving future jobs to be processed by updated data processor 512B'.

Process 400 advantageously ensures that no messages are dropped, and that the internal processing queue of a component is not lost during an update.

In some implementations, each component uses a dedicated protected storage to persist temporal data. This ensures the data integrity of the persistent storage for each component instance. Also, components may exchange information only by sending messages to each other over the event bus. The component developer may avoid using shared memory to exchange information because this type of exchange would require a synchronization of concurrent memory accesses.

If a component type binds to a specific connection port and provides a permanent server interface, it is likely not possible for the new version of the component to bind to the same connection port. In these cases, execution of S430 and S440 may be temporally switched, with graceful shutdown of the old version of the component occurring first to release the binding of the connection port. Immediately afterwards, the new version of the component starts, bind to the connection port and takes over the communication channel. Because this switchover introduces a small downtime of the connection port, one solution is to assign the responsibility for data loss prevention to a protocol of a higher layer of the Open Systems Interconnection (OSI) model which ensures the delivery of data packages.

To enable process 400, a component developer applies several changes to existing component types. First, an additional attribute of the manifest file of each component type should contain a Boolean value specifying whether the corresponding components technically support the dynamic software update. For example: x-Bundle-SupportsDynamicSoftwareUpdate: <Boolean>

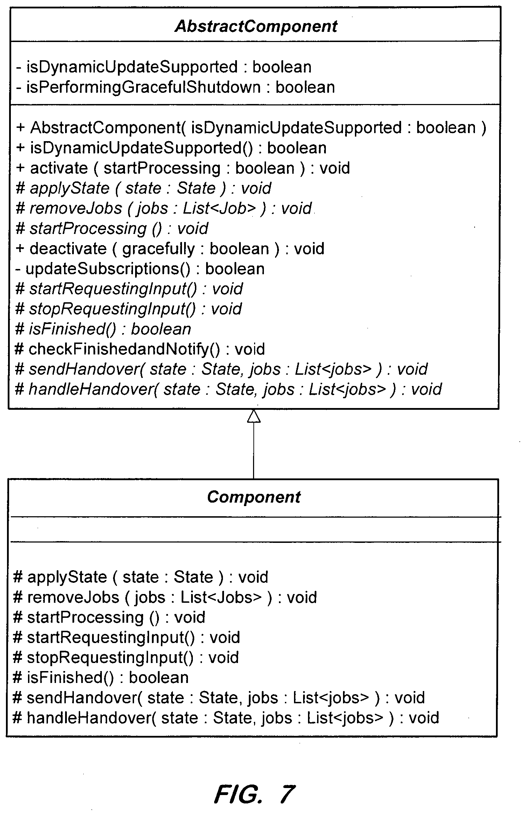

If this attribute is not set in the manifest file, the default value False is assumed. In this case, an update can only be performed by fully stopping the old version and then starting the new version. If set to true, the component developer indicates that components of this component type are able to run in parallel on the same connector device without interference. If so, the class of the component type that represents the component is adapted. The class diagram of FIG. 7 illustrates additional attributes and methods to be implemented.

During initialization of the component, the above-mentioned manifest attribute is mapped to the attribute isDynamicUpdateSupported of the component's class instance by using the class constructor. This attribute can be read by calling the appropriate getter method.

According to some embodiments of process 400, the new version of the component begins subscribing to incoming jobs shortly before the old version of the component unsubscribes from them. Since these two actions cannot be implemented atomically, both the old version and the new version may occasionally receive the same jobs. This may cause a duplication of job processing and therefore double the resource consumption on the connector's hardware device. The duplicate jobs may also cause data inconsistencies, for example, to cause an actuator device to perform a mechanical action twice.

Some embodiments of process 400 may be unable to transfer a state between the old version of a component and the new version of the component. While some components, such as device adapters or network modules, might not have an internal state besides their current processing queue, and can therefore be regarded as stateless, other components, such as data processors, may maintain certain state information. For example, a data processor might aggregate data over multiple incoming messages and therefore requires access to historical data. In the event of an update, the new instance should take over this data from the original instance in order to continue processing.

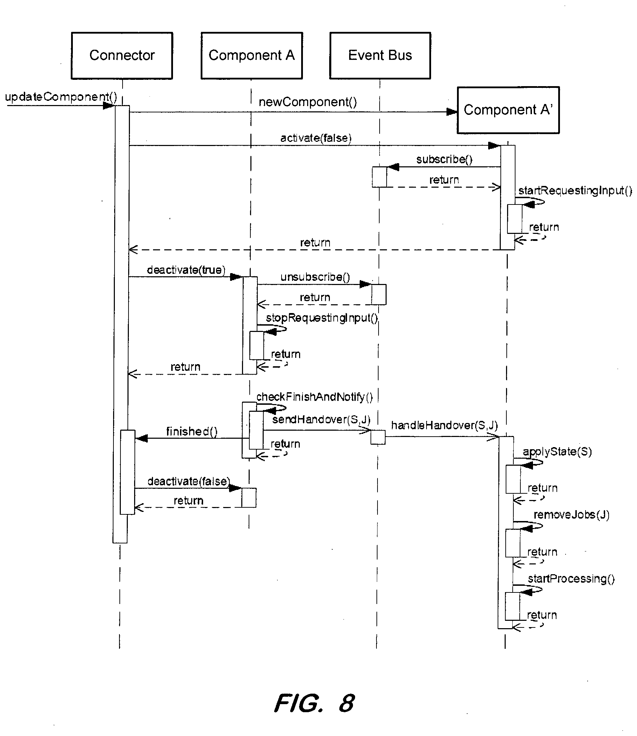

The foregoing description of process 400 may therefore be further extended by handover mechanisms which avoid duplicated jobs and facilitate a state transfer. FIG. 8 is a sequence diagram illustrating an implementation of process 400 including such handover mechanisms according to some embodiments.

As illustrated, once a connector receives the update operation, it requests the new component type version from the core repository and initiates the local update procedure updateComponentType(). This procedure creates and activates the component A' of the new component type version. The activation induces the new component to subscribe to incoming messages and, if applicable, to start requesting input from other communication channels. The parameter false requests the component to buffer the jobs instead of processing them directly.

The connector then sends a command to the old version of the component to perform a graceful shutdown. The graceful shutdown process immediately deregisters the component from the event bus and the method stopRequestingInput() causes the component to stop requesting new jobs from other communication channels. From this moment on, the old version of the component only handles jobs which it has already received. Once these jobs are complete, the old version of the component sends a handover message to the new version of the component including information on the completed jobs and, optionally, further state information needed by the new component to take over the processing. The new component then applies the state information, removes the completed jobs from its buffer and continues processing. The old version of the component also notifies the connector that it has finished processing, and, in response, the connector deactivates and removes the old component.

The handover message may contain serialized state information, for example, a list of values representing the state. In addition, it may contain information on the jobs completed by the old component version. In the general case, this may be a list of identifiers of the completed jobs. If the old component version and the new component version receive jobs in the same order, it is sufficient to only send the identifier of the latest job completed by the old component version. According to some embodiments, the connector or the preprocessing procedure of the core checks the compatibility of the two component versions with respect to their handover message formats before initiating the above-described update process.

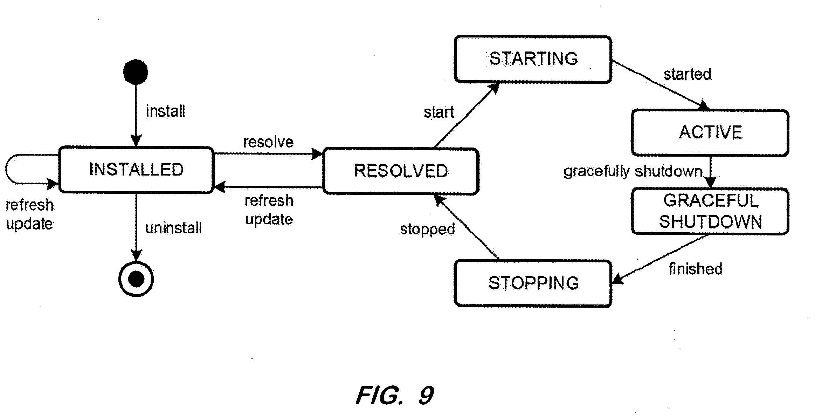

The method deactivate (true) is responsible for performing the graceful shutdown of the component. When called, the component changes its state to GRACEFUL SHUTDOWN until the process finishes. FIG. 9 illustrates a state diagram of components according to some embodiments. Internally, the new state is represented by the attribute isPerformingGraceful-Shutdown.

During the first steps of the graceful shutdown process, the methods updateSubscriptions() and stopRequestingInput() are called to unsubscribe new messages from the event bus and to stop requesting new jobs from other communication channels, if they exist. While the component is processing its outstanding jobs as described above, a task of particular relevance is to identify the point in time when all jobs have been processed. For this purpose, the component type calls the method checkFinishedAndNotify() every time a job finishes. This method, in turn, checks whether the component is in the state GRACEFUL SHUTDOWN. If so, it calls the method isFinished(), which checks whether all jobs have been processed. Depending on the return value of this method the subroutine is responsible to publish the handover message by calling sendHandover(S, J) and to notify the connector that the graceful shutdown is finished. Finally, the method handleHandover(S, J) calls the subroutines applyState(S), remove-Jobs(J) and startProcessing() to take over the state, drop already-processed jobs and continue the processing.

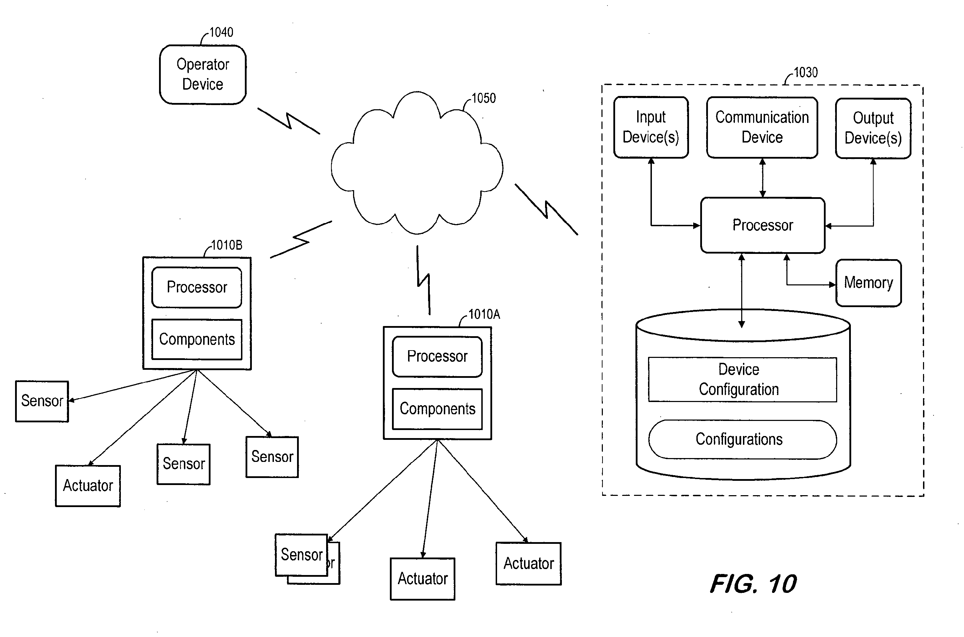

FIG. 10 is a block diagram of hardware system 1000 according to some embodiments. System 1000 includes connector devices 1010A and 1010B, core device 1030 and operator device 1040. Each of connector devices 1010A and 1010B includes a processor to execute program code to provide a connector as described above. Devices 1010A and 1010B also include software components to execute in their respective containers and to be updated as described herein. Devices 1010A and 1010B are connected to respective sensors and actuators according to some embodiments.

Operator device 1040 may provide user interfaces of a workbench for initiating component updates as described herein. In this regard, operator device 1040 may communicate via World Wide Web 1050 to core device 1030 to request an update of one or more software components. Core device 1030 may comprise a computer server including a processor which executes program code of a device configuration service to process an update request as described above with respect to FIG. 2.

All systems and processes discussed herein may be embodied in program code stored on one or more computer-readable non-transitory media. Such media non-transitory media may include, for example, a fixed disk,a floppy disk, a CD-ROM, a DVD-ROM, a Flash drive, magnetic tape, and solid state RAM or ROM storage units. Embodiments are therefore not limited to any specific combination of hardware and software.

Embodiments described herein are solely for the purpose of illustration. Those in the art will recognize other embodiments may be practiced with modifications and alterations to that described above.

## Claims

1. A system (100, 500) comprising:
a processor;
a software container (110, 510) onto which software components (112B, 512B) can be deployed, wherein each component is packaged in a Java archive (JAR) file and a framework of the software container (110, 510) expects a component's JAR file to contain
- a definition of the component's configuration parameters;
- a list of message types the component is able to consume and produce; and
- a user interface which enables an administrator to configure the component's parameters;
the system (100, 500) further comprising
a memory storing processor-executable process steps executable by the processor to cause the system (100, 500) to:
execute a first version (112B, 512B) of a software component within the software container (110, 510);
during execution of the first version (112B, 512B) of the software component, install a second version (512B') of the software component in the software container (110, 510), wherein the second version (512B') is created and activated, and the activation includes the second version (512B') to subscribe to incoming messages;
during execution of the first version (112B, 512B) of the software component, register supported message types of the second version (512B') of the software component;
during execution of the first version (112B, 512B) of the software component, execute the second version (512B') of the software component in the software container (110, 510), wherein the new component (512B') buffers jobs instead of processing them directly;
execute the first version (112B, 512B) of the software component to stop accepting incoming messages, to complete processing of jobs associated with already-accepted messages, and to transmit a handover message to the second version (512B') of the software component comprising information associated with the completed jobs; and
execute the second version (512B') of the software component to receive the handover message and to remove the completed jobs from a buffer associated with the second version (512B') of the software component.

2. A system (100, 500) according to Claim 1, wherein the handover message further comprises state information of the first version (112B, 512B) of the software component needed by the new component to take over the processing.

3. A system (100, 500) according to Claim 2, wherein the process steps are further executable by the processor to cause the system (100, 500) to:
execute the second version (512B') of the software component to receive the handover message, to update a state of the second version (512B') of the software component based on the state information, and to remove the completed jobs from the buffer associated with the second version (512B') of the software component.

4. A system (100, 500) according to any one of Claims 1-3, the process steps further executable by the processor to cause the system (100, 500) to:
after transmission of the handover message, deregister supported message types of the first version (112B, 512B) of the software component and un-install the first version (112B, 512B) of the software component from the software container (110, 510).

5. A system (100, 500) according to any one of Claims 1-4, the process steps further executable by the processor to cause the system (100, 500) to:
execute a first version (112A, 112C, 512A, 512C) of a second software component within the software container (110, 510);
during execution of the first version (112A, 112C, 512A, 512C) of the second software component, install a second version of the second software component in the software container (110, 510);
during execution of the first version (112A, 112C, 512A, 512C) of the second software component, register supported message types of the second version of the second software component;
during execution of the first version (112A, 112C, 512A, 512C) of the second software component, execute the second version of the second software component in the software container (110, 510); and
execute the first version (112A, 112C, 512A, 512C) of the second software component to stop accepting incoming messages, to complete processing of second jobs associated with messages already-accepted by the first version (112A, 112C, 512A, 512C) of the second software component, and to transmit a second handover message to the second version of the second software component comprising information associated with the second completed jobs.

6. A system (100, 500) according to Claim 5, wherein the second handover message further comprises second state information of the first version (112A, 112C, 512A, 512C) of the second software component, and wherein the process steps are further executable by the processor to cause the system (100, 500) to:
execute the second version of the second software component to receive the second handover message, to update a second state of the second version of the software component based on the second state information, and to remove the second completed jobs from the buffer associated with the second version of the second software component.

7. A method (400) implemented by a computing system (100, 500) in response to execution of program code by a processor of the computing system (100, 500), the computing system (100, 500) further comprising
a software container (110, 510) onto which software components (112B, 512B) can be deployed, wherein each component is packaged in a Java archive (JAR) file and a framework of the software container (110, 510) expects a component's JAR file to contain
- a definition of the component's configuration parameters;
- a list of message types the component is able to consume and produce; and
- a user interface which enables an administrator to configure the component's parameters;
the method (400) comprising:
executing a first version (112B, 512B) of a software component within the software container (110, 510);
during execution of the first version (112B, 512B) of the software component, installing a second version (512B') of the software component in the software container (110, 510), wherein the second version (512B') is created and activated, and the activation includes the second version (512B') to subscribe to incoming messages;
during execution of the first version (112B, 512B) of the software component, registering supported message types of the second version (512B') of the software component;
during execution of the first version (112B, 512B) of the software component, executing the second version (512B') of the software component in the software container (110, 510), wherein the new component (512B') buffers jobs instead of processing them directly; and
executing the first version (112B, 512B) of the software component to stop accepting incoming messages, to complete processing of jobs associated with already-accepted messages, and to transmit a handover message to the second version (512B') of the software component comprising information associated with the completed jobs; and
executing the second version (512B') of the software component to receive the handover message and to remove the completed jobs from a buffer associated with the second version (512B') of the software component.

8. A method (400) according to Claim 7, wherein the handover message further comprises state information of the first version (112B, 512B) of the software component needed by the new component to take over the processing.

9. A method (400) according to Claim 8, further comprising:
executing the second version (512B') of the software component to receive the handover message, to update a state of the second version (512B') of the software component based on the state information, and to remove the completed jobs from a buffer associated with the second version (512B') of the software component.

10. A method (400) according to any one of Claims 7-9, further comprising:
after transmission of the handover message, deregistering supported message types of the first version (112B, 512B) of the software component and un-installing the first version (112B, 512B) of the software component from the software container (110, 510).

11. A method (400) according to any one of Claims 7-10, further comprising:
executing a first version (112A, 112C, 512A, 512C) of a second software component within the software container (110, 510);
during execution of the first version (112A, 112C, 512A, 512C) of the second software component, installing a second version of the second software component in the software container (110, 510);
during execution of the first version (112A, 112C, 512A, 512C) of the second software component, registering supported message types of the second version of the second software component;
during execution of the first version (112A, 112C, 512A, 512C) of the second software component, executing the second version of the second software component in the software container (110, 510); and
executing the first version (112A, 112C, 512A, 512C) of the second software component to stop accepting incoming messages, to complete processing of second jobs associated with messages already-accepted by the first version (112A, 112C, 512A, 512C) of the second software component, and to transmit a second handover message to the second version of the second software component comprising information associated with the second completed jobs.

12. A method (400) according to Claim 11, wherein the second handover message further comprises second state information of the first version (112A, 112C, 512A, 512C) of the second software component, and further comprising:
executing the second version of the second software component to receive the second handover message, to update a second state of the second version of the software component based on the second state information, and to remove the second completed jobs from the buffer associated with the second version of the second software component.

13. A non-transitory computer-readable medium storing program code, the program code executable by a processor of a computing system (100, 500) to cause the computing system (100, 500) to perform a method (400) according to any one of claims 7-12.

## Patentansprüche

1. System (100, 500), umfassend:
einen Prozessor;
einen Softwarecontainer (110, 510), auf dem Softwarekomponenten (112B, 512B) verteilt bzw. bereitgestellt werden können, wobei jede Komponente in eine Java-Archiv(JAR)-Datei gepackt ist und ein Framework des Softwarecontainers (110, 510) erwartet, dass eine JAR-Datei der Komponente enthält
- eine Definition der Konfigurationsparameter der Komponente;
- eine Liste von Nachrichtentypen, welche die Komponente konsumieren und produzieren kann; und
- eine Benutzeroberfläche, die es einem Administrator ermöglicht, die Parameter der Komponente zu konfigurieren;
wobei das System (100, 500) ferner umfasst
einen Speicher, der prozessorausführbare Prozessschritte speichert, die durch den Prozessor ausführbar sind, um das System (100, 500) zu veranlassen zum:
Ausführen einer ersten Version (112B, 512B) einer Softwarekomponente innerhalb des Softwarecontainers (110, 510);
während der Ausführung der ersten Version (112B, 512B) der Softwarekomponente, Installieren einer zweiten Version (512B') der Softwarekomponente in dem Softwarecontainer (110, 510), wobei die zweite Version (512B') erstellt und aktiviert wird, und die Aktivierung beinhaltet, dass die zweite Version (512B') eingehende Nachrichten abonniert;
während der Ausführung der ersten Version (112B, 512B) der Softwarekomponente, Registrieren unterstützter Nachrichtentypen der zweiten Version (512B') der Softwarekomponente;
während der Ausführung der ersten Version (112B, 512B) der Softwarekomponente, Ausführen der zweiten Version (512B') der Softwarekomponente in dem Softwarecontainer (110, 510), wobei die neue Komponente (512B') Jobs puffert, anstatt diese direkt zu verarbeiten;
Ausführen der ersten Version (112B, 512B) der Softwarekomponente, um die Annahme eingehender Nachrichten zu stoppen, die Verarbeitung von Jobs abzuschließen, die mit bereits akzeptierten Nachrichten verknüpft sind, und
eine Übergabenachricht an die zweite Version (512B') der Softwarekomponente zu übertragen, die Informationen umfasst, die mit den abgeschlossenen Jobs verknüpft sind; und
Ausführen der zweiten Version (512B') der Softwarekomponente, um die Übergabenachricht zu empfangen und die abgeschlossenen Jobs aus einem Puffer zu entfernen, der mit der zweiten Version (512B') der Softwarekomponente verknüpft ist.

2. System (100, 500) nach Anspruch 1, wobei die Übergabenachricht ferner Zustandsinformationen der ersten Version (112B, 512B) der Softwarekomponente umfasst, die von der neuen Komponente benötigt werden, um die Verarbeitung zu übernehmen.

3. System (100, 500) nach Anspruch 2, wobei die Prozessschritte ferner durch den Prozessor ausführbar sind, um das System (100, 500) zu veranlassen zum:
Ausführen der zweiten Version (512B') der Softwarekomponente, um die Übergabenachricht zu empfangen, einen Zustand der zweiten Version (512B') der Softwarekomponente basierend auf den Zustandsinformationen zu aktualisieren und die abgeschlossenen Jobs aus dem Puffer zu entfernen, der mit der zweiten Version (512B') der Softwarekomponente verknüpft ist.

4. System (100, 500) nach einem der Ansprüche 1-3, wobei die Prozessschritte ferner durch den Prozessor ausführbar sind, um das System (100, 500) zu veranlassen zum:
nach Übertragung der Übergabenachricht, Deregistrieren unterstützter Nachrichtentypen der ersten Version (112B, 512B) der Softwarekomponente und
Deinstallieren der ersten Version (112B, 512B) der Softwarekomponente aus dem Softwarecontainer (110, 510).

5. System (100, 500) nach einem der Ansprüche 1-4, wobei die Prozessschritte ferner durch den Prozessor ausführbar sind, um das System (100, 500) zu veranlassen zum:
Ausführen einer ersten Version (112A, 112C, 512A, 512C) einer zweiten Softwarekomponente innerhalb des Softwarecontainers (110, 510);
während der Ausführung der ersten Version (112A, 112C, 512A, 512C) der zweiten Softwarekomponente, Installieren einer zweiten Version der zweiten Softwarekomponente in dem Softwarecontainer (110, 510);
während der Ausführung der ersten Version (112A, 112C, 512A, 512C) der zweiten Softwarekomponente, Registrieren unterstützter Nachrichtentypen der zweiten Version der zweiten Softwarekomponente;
während der Ausführung der ersten Version (112A, 112C, 512A, 512C) der zweiten Softwarekomponente, Ausführen der zweiten Version der zweiten Softwarekomponente in dem Softwarecontainer (110, 510); und
Ausführen der ersten Version (112A, 112C, 512A, 512C) der zweiten Softwarekomponente, um die Annahme eingehender Nachrichten zu stoppen, um die Verarbeitung von zweiten Jobs abzuschließen, die mit Nachrichten verknüpft sind, die bereits von der ersten Version (112A, 112C, 512A, 512C) der zweiten Softwarekomponente akzeptiert wurden, und eine zweite Übergabenachricht an die zweite Version der zweiten Softwarekomponente zu übertragen, die Informationen umfasst, die mit den zweiten abgeschlossenen Jobs verknüpft sind.

6. System (100, 500) nach Anspruch 5, wobei die zweite Übergabenachricht ferner zweite Zustandsinformationen der ersten Version (112A, 112C, 512A, 512C) der zweiten Softwarekomponente umfasst, und wobei die Prozessschritte ferner durch den Prozessor ausführbar sind, um das System (100, 500) zu veranlassen zum:
Ausführen der zweiten Version der zweiten Softwarekomponente, um die zweite Übergabenachricht zu empfangen, Aktualisieren eines zweiten Zustands der zweiten Version der Softwarekomponente basierend auf den zweiten Zustandsinformationen und Entfernen der zweiten abgeschlossenen Jobs aus dem Puffer, der mit der zweiten Version der zweiten Softwarekomponente verknüpft ist.

7. Verfahren (400), das von einem Rechensystem (100, 500) als Antwort auf die Ausführung von Programmcode durch einen Prozessor des Rechensystems (100, 500) implementiert wird, wobei das Rechensystem (100, 500) ferner umfasst:
einen Softwarecontainer (110, 510), auf dem Softwarekomponenten (112B, 512B) verteilt bzw. bereitgestellt werden können, wobei jede Komponente in eine Java-Archiv(JAR)-Datei gepackt ist und ein Framework des Softwarecontainers (110, 510) erwartet, dass eine JAR-Datei der Komponente enthält
- eine Definition der Konfigurationsparameter der Komponente;
- eine Liste von Nachrichtentypen, welche die Komponente konsumieren und produzieren kann; und
- eine Benutzeroberfläche, die es einem Administrator ermöglicht, die Parameter der Komponente zu konfigurieren;
wobei das Verfahren (400) umfasst:
Ausführen einer ersten Version (112B, 512B) einer Softwarekomponente innerhalb des Softwarecontainers (110, 510);
während der Ausführung der ersten Version (112B, 512B) der Softwarekomponente, Installieren einer zweiten Version (512B') der Softwarekomponente in dem Softwarecontainer (110, 510), wobei die zweite Version (512B') erstellt und aktiviert wird, und die Aktivierung beinhaltet, dass die zweite Version (512B') eingehende Nachrichten abonniert;
während der Ausführung der ersten Version (112B, 512B) der Softwarekomponente, Registrieren unterstützter Nachrichtentypen der zweiten Version (512B') der Softwarekomponente;
während der Ausführung der ersten Version (112B, 512B) der Softwarekomponente, Ausführen der zweiten Version (512B') der Softwarekomponente in dem Softwarecontainer (110, 510), wobei die neue Komponente (512B') Jobs puffert, anstatt diese direkt zu verarbeiten;
Ausführen der ersten Version (112B, 512B) der Softwarekomponente, um die Annahme eingehender Nachrichten zu stoppen, die Verarbeitung von Jobs abzuschließen, die mit bereits akzeptierten Nachrichten verknüpft sind, und
eine Übergabenachricht an die zweite Version (512B') der Softwarekomponente zu übertragen, die Informationen umfasst, die mit den abgeschlossenen Jobs verknüpft sind; und
Ausführen der zweiten Version (512B') der Softwarekomponente, um die Übergabenachricht zu empfangen und die abgeschlossenen Jobs aus einem Puffer zu entfernen, der mit der zweiten Version (512B') der Softwarekomponente verknüpft ist.

8. Verfahren (400) nach Anspruch 7, wobei die Übergabenachricht ferner Zustandsinformationen der ersten Version (112B, 512B) der Softwarekomponente umfasst, die von der neuen Komponente benötigt werden, um die Verarbeitung zu übernehmen.

9. Verfahren (400) nach Anspruch 8, ferner umfassend:
Ausführen der zweiten Version (512B') der Softwarekomponente, um die Übergabenachricht zu empfangen, einen Zustand der zweiten Version (512B') der Softwarekomponente basierend auf den Zustandsinformationen zu aktualisieren und die abgeschlossenen Jobs aus dem Puffer zu entfernen, der mit der zweiten Version (512B') der Softwarekomponente verknüpft ist.

10. Verfahren (400) nach einem der Ansprüche 7-9, ferner umfassend:
nach Übertragung der Übergabenachricht, Deregistrieren unterstützter Nachrichtentypen der ersten Version (112B, 512B) der Softwarekomponente und
Deinstallieren der ersten Version (112B, 512B) der Softwarekomponente aus dem Softwarecontainer (110, 510).

11. Verfahren (400) nach einem der Ansprüche 7-10, ferner umfassend:
Ausführen einer ersten Version (112A, 112C, 512A, 512C) einer zweiten Softwarekomponente innerhalb des Softwarecontainers (110, 510);
während der Ausführung der ersten Version (112A, 112C, 512A, 512C) der zweiten Softwarekomponente, Installieren einer zweiten Version der zweiten Softwarekomponente in dem Softwarecontainer (110, 510);
während der Ausführung der ersten Version (112A, 112C, 512A, 512C) der zweiten Softwarekomponente, Registrieren unterstützter Nachrichtentypen der zweiten Version der zweiten Softwarekomponente;
während der Ausführung der ersten Version (112A, 112C, 512A, 512C) der zweiten Softwarekomponente, Ausführen der zweiten Version der zweiten Softwarekomponente in dem Softwarecontainer (110, 510); und
Ausführen der ersten Version (112A, 112C, 512A, 512C) der zweiten Softwarekomponente, um die Annahme eingehender Nachrichten zu stoppen, um die Verarbeitung von zweiten Jobs abzuschließen, die mit Nachrichten verknüpft sind, die bereits von der ersten Version (112A, 112C, 512A, 512C) der zweiten Softwarekomponente akzeptiert wurden, und eine zweite Übergabenachricht an die zweite Version der zweiten Softwarekomponente zu übertragen, die Informationen umfasst, die mit den zweiten abgeschlossenen Jobs verknüpft sind.

12. Verfahren (400) nach Anspruch 11, wobei die zweite Übergabenachricht ferner zweite Zustandsinformationen der ersten Version (112A, 112C, 512A, 512C) der zweiten Softwarekomponente umfasst, und ferner umfassend:
Ausführen der zweiten Version der zweiten Softwarekomponente, um die zweite Übergabenachricht zu empfangen, um einen zweiten Zustand der zweiten Version der Softwarekomponente basierend auf den zweiten Zustandsinformationen zu aktualisieren, und um die zweiten abgeschlossenen Jobs aus dem Puffer zu entfernen, der mit der zweiten Version der zweiten Softwarekomponente verknüpft ist.

13. Nicht flüchtiges computerlesbares Medium, das Programmcode speichert, wobei der Programmcode durch einen Prozessor eines Rechensystems (100, 500) ausführbar ist, um das Rechensystem (100, 500) zu veranlassen, ein Verfahren (400) nach einem der Ansprüche 7-12 auszuführen.

## Revendications

1. Système (100, 500) comprenant :
un processeur ;
un conteneur logiciel (110, 510) sur lequel des composants logiciels (112B, 512B) peuvent être déployés, dans lequel chaque composant est emballé dans un fichier d'archivé Java (JAR) et un cadre d'applications du conteneur logiciel (110, 510) s'attend à ce que le fichier JAR d'un composant contienne
- une définition des paramètres de configuration du composant ;
- une liste de types de message que le composant est capable de consommer et produire ; et
- une interface utilisateur qui permet à un administrateur de configurer les paramètres du composant ;
le système (100, 500) comprenant en outre
des étapes de processus à stockage en mémoire, exécutables par un processeur pouvant être exécutées par le processeur pour amener le système (100, 500) à :
exécuter une première version (112B, 512B) d'un composant logiciel au sein du conteneur logiciel (110, 510) ;
au cours de l'exécution de la première version (112B, 512B) du composant logiciel, installer une seconde version (512B') du composant logiciel dans le conteneur logiciel (110, 510), dans lequel la seconde version (512B') est créée et
activée, et l'activation inclut la seconde version (512B') devant s'abonner à des messages entrants ;
au cours de l'exécution de la première version (112B, 512B) du composant logiciel, enregistrer des types de message supportés de la seconde version (512B') du composant logiciel ;
au cours de l'exécution de la première version (112B, 512B) du composant logiciel, exécuter la seconde version (512B') du composant logiciel dans le conteneur logiciel (110, 510), dans lequel le nouveau composant (512B') met en mémoire tampon des tâches au lieu de les traiter directement ;
exécuter la première version (112B, 512B) du composant logiciel pour arrêter d'accepter des messages entrants, pour achever le traitement de tâches associées à des messages déjà acceptés, et pour transmettre un message de transfert à la seconde version (512B') du composant logiciel comprenant des informations associées aux tâches achevées ; et
exécuter la seconde version (512B') du composant logiciel pour recevoir le message de transfert et pour éliminer les tâches achevées d'une mémoire tampon associées à la seconde version (512B') du composant logiciel.

2. Système (100, 500) selon la revendication 1, dans lequel le message de transfert comprend en outre des informations d'état de la première version (112B, 512B) du composant logiciel nécessaires par le nouveau composant pour prendre en charge le traitement.

3. Système (100, 500) selon la revendication 2, dans lequel les étapes de processus peuvent en outre être exécutées par le processeur pour amener le système (100, 500)à :
exécuter la seconde version (512B') du composant logiciel pour recevoir le message de transfert, pour mettre à jour un état de la seconde version (512B') du composant logiciel en fonction des informations d'état, et pour éliminer les tâches achevées de la mémoire tampon associées à la seconde version (512B') du composant logiciel.

4. Système (100, 500) selon l'une quelconque des revendications 1 à 3, les étapes de processus pouvant en outre être exécutées par le processeur pour amener le système (100, 500) à :
après la transmission du message de transfert, désenregistrer des types de message supportés de la première version (112B, 512B) du composant logiciel et désinstaller la première version (112B, 512B) du composant logiciel du conteneur logiciel (110, 510).

5. Système (100, 500) selon l'une quelconque des revendications 1 à 4, les étapes de processus pouvant en outre être exécutées par le processeur pour amener le système (100, 500) à :
exécuter une première version (112A, 112C, 512A, 512C) d'un second composant logiciel au sein du conteneur logiciel (110, 510) ;
au cours de l'exécution de la première version (112A, 112C, 512A, 512C) du second composant logiciel, installer une seconde version du second composant logiciel dans le conteneur logiciel (110, 510) ;
au cours de l'exécution de la première version (112A, 112C, 512A, 512C) du second composant logiciel, enregistrer des types de message supportés de la seconde version du second composant logiciel ;
au cours de l'exécution de la première version (112A, 112C, 512A, 512C) du second composant logiciel, exécuter la seconde version du second composant logiciel dans le conteneur logiciel (110, 510) ; et
exécuter la première version (112A, 112C, 512A, 512C) du second composant logiciel pour arrêter d'accepter des messages entrants, pour achever le traitement de secondes tâches associées à des messages déjà acceptés par la première version (112A, 112C, 512A, 512C) du second composant logiciel, et pour transmettre un second message de transfert à la seconde version du second composant logiciel comprenant des informations associées aux secondes tâches achevées.

6. Système (100, 500) selon la revendication 5, dans lequel le second message de transfert comprend en outre des secondes informations d'état de la première version (112A, 112C, 512A, 512C) du second composant logiciel, et dans lequel les étapes de processus peuvent en outre être exécutées par le processeur pour amener le système (100, 500) à :
exécuter la seconde version du second composant logiciel pour recevoir le second message de transfert, pour mettre à jour un second état de la seconde version du composant logiciel en fonction des secondes informations d'état, et
pour éliminer les secondes tâches achevées de la mémoire tampon associées à la seconde version du second composant logiciel.

7. Procédé (400) mis en oeuvre par un système informatique (100, 500) en réponse à l'exécution de code de programme par un processeur du système informatique (100, 500), le système informatique (100, 500) comprenant en outre un conteneur logiciel (110, 510) sur lequel des composants logiciels (112B, 512B) peuvent être déployés, dans lequel chaque composant est emballé dans un fichier d'archivé Java (JAR) et un cadre d'applications du conteneur logiciel (110, 510) s'attend à ce que le fichier JAR d'un composant contienne
- une définition des paramètres de configuration du composant ;
- une liste de types de message que le composant est capable de consommer et produire ; et
- une interface utilisateur qui permet à un administrateur de configurer les paramètres du composant ;
le procédé (400) comprenant :
exécuter une première version (112B, 512B) d'un composant logiciel au sein du conteneur logiciel (110, 510) ;
au cours de l'exécution de la première version (112B, 512B) du composant logiciel, installer une seconde version (512B') du composant logiciel dans le conteneur logiciel (110, 510), dans lequel la seconde version (512B') est créée et
activée, et l'activation inclut la seconde version (512B') devant s'abonner à des messages entrants ;
au cours de l'exécution de la première version (112B, 512B) du composant logiciel, enregistrer des types de message supportés de la seconde version (512B') du composant logiciel ;
au cours de l'exécution de la première version (112B, 512B) du composant logiciel, exécuter la seconde version (512B') du composant logiciel dans le conteneur logiciel (110, 510), dans lequel le nouveau composant (512B') met en mémoire tampon des tâches au lieu de les traiter directement ; et
exécuter la première version (112B, 512B) du composant logiciel pour arrêter d'accepter des messages entrants, pour achever le traitement de tâches associées à des messages déjà acceptés, et pour transmettre un message de transfert à la seconde version (512B') du composant logiciel comprenant des informations associées aux tâches achevées ; et
exécuter la seconde version (512B') du composant logiciel pour recevoir le message de transfert et pour éliminer les tâches achevées d'une mémoire tampon associées à la seconde version (512B') du composant logiciel.

8. Procédé (400) selon la revendication 7, dans lequel le message de transfert comprend en outre des informations d'état de la première version (112B, 512B) du composant logiciel nécessaires par le nouveau composant pour prendre en charge le traitement.

9. Procédé (400) selon la revendication 8, comprenant en outre :
exécuter la seconde version (512B') du composant logiciel pour recevoir le message de transfert, pour mettre à jour un état de la seconde version (512B') du composant logiciel en fonction des informations d'état, et pour éliminer les tâches achevées d'une mémoire tampon associées à la seconde version (512B') du composant logiciel.

10. Procédé (400) selon l'une quelconque des revendications 7 à 9, comprenant en outre :
après la transmission du message de transfert, désenregistrer des types de message supportés de la première version (112B, 512B) du composant logiciel et désinstaller la première version (112B, 512B) du composant logiciel du conteneur logiciel (110, 510).

11. Procédé (400) selon l'une quelconque des revendications 7 à 10, comprenant en outre :
exécuter une première version (112A, 112C, 512A, 512C) d'un second composant logiciel au sein du conteneur logiciel (110, 510) ;
au cours de l'exécution de la première version (112A, 112C, 512A, 512C) du second composant logiciel, installer une seconde version du second composant logiciel dans le conteneur logiciel (110, 510) ;
au cours de l'exécution de la première version (112A, 112C, 512A, 512C) du second composant logiciel, enregistrer des types de message supportés de la seconde version du second composant logiciel ;
au cours de l'exécution de la première version (112A, 112C, 512A, 512C) du second composant logiciel, exécuter la seconde version du second composant logiciel dans le conteneur logiciel (110, 510) ; et
exécuter la première version (112A, 112C, 512A, 512C) du second composant logiciel pour arrêter d'accepter des messages entrants, pour achever le traitement de secondes tâches associées à des messages déjà acceptés par la première version (112A, 112C, 512A, 512C) du second composant logiciel, et pour transmettre un second message de transfert à la seconde version du second composant logiciel comprenant des informations associées aux secondes tâches achevées.

12. Procédé (400) selon la revendication 11, dans lequel le second message de transfert comprend en outre des secondes informations d'état de la première version (112A, 112C, 512A, 512C) du second composant logiciel, et comprenant en outre :
exécuter la seconde version du second composant logiciel pour recevoir le second message de transfert, pour mettre à jour un second état de la seconde version du composant logiciel en fonction des secondes informations d'état, et
pour éliminer les secondes tâches achevées de la mémoire tampon associées à la seconde version du second composant logiciel.

13. Support non transitoire lisible par ordinateur stockant du code de programme, le code de programme pouvant être exécuté par un processeur d'un système informatique (100, 500) pour amener le système informatique (100, 500) à réaliser un procédé (400) selon l'une quelconque des revendications 7 à 12.
